Europäisches Patentamt

European Patent Office

Office européen des brevets

(11) Numéro de publication: **0 100 708**
**B1**

## FASCICULE DE BREVET EUROPEEN

(45) Date de publication du fascicule du brevet: **14.10.87**

(51) Int. Cl.⁴: **G 01 V 1/40**, G 01 V 11/00

(21) Numéro de dépôt: **83401434.2**

(22) Date de dépôt: **12.07.83**

(54) Procédé et dispositif d'acquisition de signaux sismiques dans un forage.

(30) Priorité: **13.07.82 FR 8212253**

(43) Date de publication de la demande:
**15.02.84 Bulletin 84/07**

(45) Mention de la délivrance du brevet:
**14.10.87 Bulletin 87/42**

(84) Etats contractants désignés:
**AT DE FR GB IT NL SE**

(56) Documents cités:
**FR-A-1 602 303**

**THE OIL AND GAS JOURNAL, vol. 77, no. 28, 9 juillet 1979, pages 139-143, Tulsa, Okla., US; D.G. (PETER) LANG: "Technique expands borehole data"**

**GLÜCKAUF, vol. 115, no. 16, aou7t 1979, pages 818-819, Essen, DE; H. RÜTER: "Reflexionsseismik unter Tage"**

(73) Titulaire: **SOCIETE DE PROSPECTION ELECTRIQUE SCHLUMBERGER**
**42, rue Saint-Dominique**
**F-75340 Paris Cedex 07 (FR)**
(84) **FR IT**

(73) Titulaire: **Schlumberger Limited**
**277 Park Avenue**
**New York, N.Y. 10172 (US)**
(84) **DE GB NL SE AT**

(72) Inventeur: **Decorps, Jean-Luc Roger Auguste Louis**
**6, 8 rue Jenner**
**F-75013 Paris (FR)**
Inventeur: **Blanpain, Guy**
**78, rue Gabriel Péri**
**F-92120 Montrouge (FR)**

(74) Mandataire: **Le Cren, Roger et al**
**Service Brevets Etudes et Productions Schlumberger B.P. 202 26, rue de la Cavée**
**F-92142 Clamart, Cédex (FR)**

Courier Press, Leamington Spa, England.

EP 0 100 708 B1

## Description

La présente invention concerne l'acquisition de signaux sismiques à différents niveaux dans un forage, en réponse à la génération d'ondes sismiques par une source placée en surface ou au voisinage de la surface.

Lorsqu'on enregistre à différents niveaux dans un forage, au moyen d'un détecteur, les ondes sismiques produites par une source, on obtient une série de signaux sismiques que l'on regroupe, après traitement approprié, pour former un profil sismique vertical. L'analyse d'un tel profil fournit des indications très précieuses sur la structure des formations géologiques traversées par le forage, et notamment sur la position et le pendage des couches réflexives, y compris de celles qui sont situées à une profondeur plus grande que le fond du forage.

Il est connu d'utiliser à cet effet une sonde comprenant un corps allongé, des moyens de détection d'ondes sismiques, un organe d'ancrage articulé sur le corps, un dispositif élastique agissant pour écarter l'organe d'ancrage du corps de sonde de façon à le placer en contact avec la paroi du forage et un dispositif moteur capable de placer l'organe d'ancrage en position repliée contre l'action du dispositif élastique (Publication "Oil and Gas Journal", Vol. 77, No. 28, juillet 1979, "Technique expands borehole data" auteur D. G. (Peter) Lang).

Pour une analyse complète, il est nécessaire que des enregistrements soient effectués à un très grand nombre de niveaux différents, par exemple 200 ou davantage. Cela demande un temps très long, d'autant plus que plusieurs mesures sont réalisées à chaque niveau afin d'améliorer la qualité des signaux.

L'invention vise à réaliser l'acquisition de signaux sismiques dans un forage de façon optimale du point de vue de la rapidité.

L'invention a pour objet, selon un premier aspect, un procédé d'acquisition de signaux sismiques à des niveaux successifs dans un forage au moyen d'une sonde du type indiqué, caractérisé par le fait que: à chacun desdits niveaux, on applique à l'organe d'ancrage, en position écartée, au moyen du dispositif moteur, une force propre à le rendre solidaire de la paroi du forage, puis, une fois obtenu au moins un signal de détection, une force propre à désolidariser l'organe d'ancrage de la paroi, et on déplace la sonde d'un niveau à l'autre en laissant l'organe d'ancrage en position écartée sous l'action du dispositif élastique.

Le maintien en position ouverte de l'organe d'ancrage au cours des déplacements entre niveaux successifs représente un gain de temps important, puisqu'on évite ainsi d'avoir à fermer l'organe d'ancrage à la fin des mesures à un niveau et à l'ouvrir à l'arrivée au niveau suivant.

On met en outre à profit cette caractéristique pour réaliser une diagraphie des formations au cours de ces déplacements, par exemple une mesure de microrésistivité au moyen d'une électrode placée sur le patin et restant ainsi constamment en contact avec la paroi. Cela permet de déterminer avec précision la profondeur des différents niveaux de mesure, par corrélation entre cette diagraphie et d'autres diagraphies réalisées dans le même forage.

Selon un autre aspect, l'invention a pour objet une sonde pour l'acquisition de signaux sismiques à différents niveaux dans un forage, du type comprenant:
— un corps allongé;
— des moyens de détection d'ondes sismiques dans le corps;
— un organe d'ancrage articulé sur le corps, et pouvant occuper une position repliée sensiblement dans la direction du corps;
— un dispositif élastique agissant pour écarter l'organe d'ancrage du corps;
— un dispositif moteur capable de placer l'organe d'ancrage en position repliée contre l'action du dispositif élastique, par l'intermédiaire d'un ensemble de transmission, caractérisé par le fait que le dispositif moteur est capable de fournir un couple dans les deux sens de rotation, et l'ensemble de transmission comprend un dispositif d'embrayage.

L'invention sera bien comprise à la lecture de la description ci-après, fait en référence aux dessins annexés.

Dans les dessins
— la figure 1 représente une installation pour la prospection sismique dans un forage;
— la figure 2 montre à plus grande échelle la sonde d'acquistion sismique représentée à la figure 1;
— la figure 3 est une vue schématique de la section d'ancrage de la sonde;
— la figure 4 montre en coupe axiale le dispositif de la section d'ancrage;
— la figure 5 montre un détail du dispositif d'accouplement;
— la figure 6 représente l'articulation du bras d'ancrage sur la sonde;
— la figure 7 est une coupe selon le plan VII—VII de la figure 6;
— la figure 8 est une vue en coupe longitudinale du patin d'ancrage;
— la figure 9 montre le capteur de force logé dans le patin;
— la figure 10 montre le dispositif d'électrode logé dans le patin.

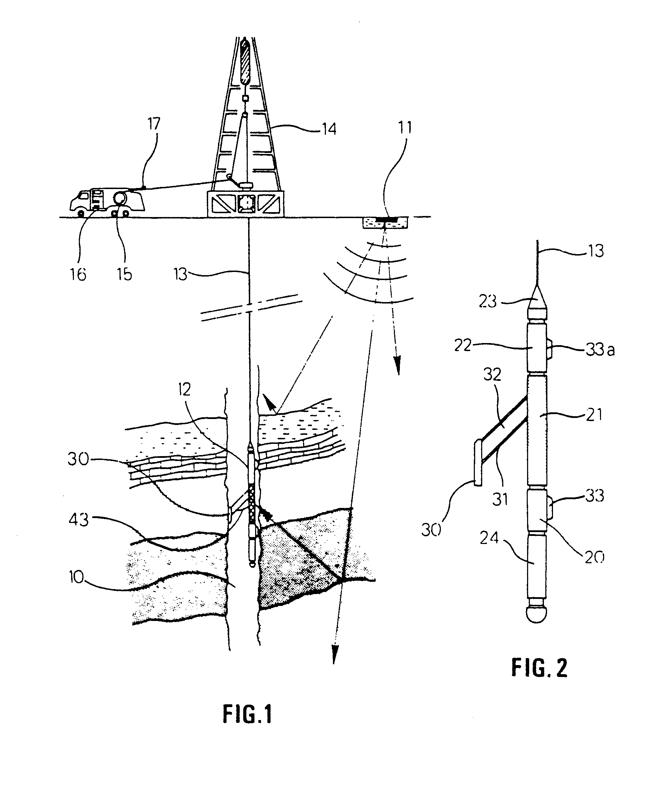

On a représenté à la figure 1 un forage d'exploration 10 traversant des formations géologiques. Une source d'ondes sismiques 11 telle qu'un canon à air est placée en surface avec un certain décalage par rapport à la tête du forage. Les ébranlements sismiques produits par la source sont détectés au moyen d'une sonde d'acquisition sismique 12 descendue dans le forage.

La sonde 12 est suspendue à l'extrémité d'un câble électrique 13. Le câble 13 passe sur des poulies de la tour de forage 14 et est enroulé sur un treuil 15 porté par un équipement de surface 16. L'équipement de surface fournit à la sonde 12, par l'intermédiaire du câble 13, l'alimentation électrique et les signaux de commande nécessaires à son fonctionnement. En retour, les signaux sismiques produits par le sonde sont acheminés par le câble et enregistrés par l'équipement de surface. Un dispositif schématisé en 17, associé au treuil 15, mesure le défilement du câble et permet de déterminer la profondeur de la sonde, en vue de faire correspondre à chaque signal sismique enregistré la profondeur de la sonde lors de l'enregistrement.

Comme le montre mieux la figure 2, la sonde 12 comprend essentiellement quatre sections: une section de détection 20, une section dancrage 21 au-dessus de la section 20, destinée à assurer un couplage approprié de la section de détection avec la formation géologique, une cartouche électronique supérieure 22 reliée au câble par une tête de connection 23, et une cartouche électronique 24 formant l'extrémité inférieure de la sonde. La cartouche 24 est reliée électriquement à la tête 23 et contient des circuits pour le pré-traitement des signaux de détection produits par la section 20 et un dispositif de télémesure constituant l'interface avec le câble 13 en vue de la transmission des signaux. La cartouche supérieure 22 fournit la tension d'alimentation à la section d'ancrage en fonction de signaux adressés par l'équipement de surface et par d'autres sections de la sonde.

La section de détection 20 comprend au moins un détecteur tel qu'un géophone ou un accéléromètre. De façon appropriée, il est prévu trois détecteurs disposés selon une configuration triaxiale.

Pour obtenir des signaux de qualité satisfaisante, il est indispensable de coupler de façon optimale la section de détection à la formation. Pour cela, la section d'ancrage comporte un patin 30 destiné à s'ancrer dans la paroi du forage et porté par deux bras 31 et 32 articulés sur le corps de la sonde, et au moins sensiblement parallèles, et du côté opposé au patin d'ancrage, la section de détection et la cartouche 22 comportent des éléments d'appui respectifs 33 et 33a fournissant une surface de contact appropriée avec la paroi.

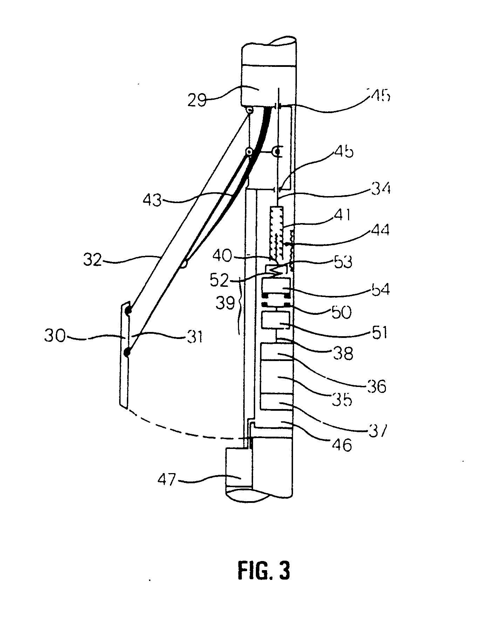

La figure 3 est un schéma fonctionnel de la section d'ancrage. La force d'ancrage est transmise au patin 30 par le bras inférieur 31. Le pivotement du bras 31 est provoqué par la translation d'une tige d'actionnement 34. La liaison entre le bras 31 et la tige 34 sera décrite en détail ci-après. La force d'ancrage est fournie par un moteur asynchrone réversible 35 du type moteur-couple, muni d'un réducteur de sortie 36 et d'un frein électromagnétique 37 actif en l'absence de courant. L'arbre de sortie 38 du réducteur 36 est relié par l'intermédiaire d'un dispositif d'accouplement 39, qui sera décrit en détail ci-après, à une vis à billes 40 en prise avec un écrou 41 qui entraîne la tige d'actionnement 34.

En outre, un dispositif de rappel 43 agit en permanence sur les bras 31, 32 dans le sens de leur ouverture.

On a également schématisé sur la figure 3 un potentiomètre 44 qui permet de mesurer le déplacement de l'écrou 41, donc l'écart du patin d'ancrage par rapport à la sonde, cet écart étant indicatif du diamètre du forage.

Des joints 45 autorisent le déplacement en translation de la tige 34 tout en interdisant l'entrée de la boue de forage dans l'espace intérieur 46 contenant l'ensemble moteur 35—38, le dispositif d'accouplement 39 et le système vis-écrou 40—41. Un dispositif de compensation de pression 47, d'un type bien connu dans les sondes de diagraphie, est placé à l'extrémité inférieure de la section d'ancrage. Il a pour fonction de mettre l'espace intérieur 46 en équilibre de pression avec la boue de forage. La pression sur les faces opposées des joints 45 est ainsi sensiblement la même.

Le dispositif d'accouplement 39 tel que représenté à la figure 3 comprend essentiellement un dispositif d'embrayage 50, une logique mécanique 51 commandant l'embrayage ou le débrayage en fonction du sens de rotation du moteur et des efforts s'exerçant sur le patin, un ressort 52 et une butée 53, et un limiteur de couple 54.

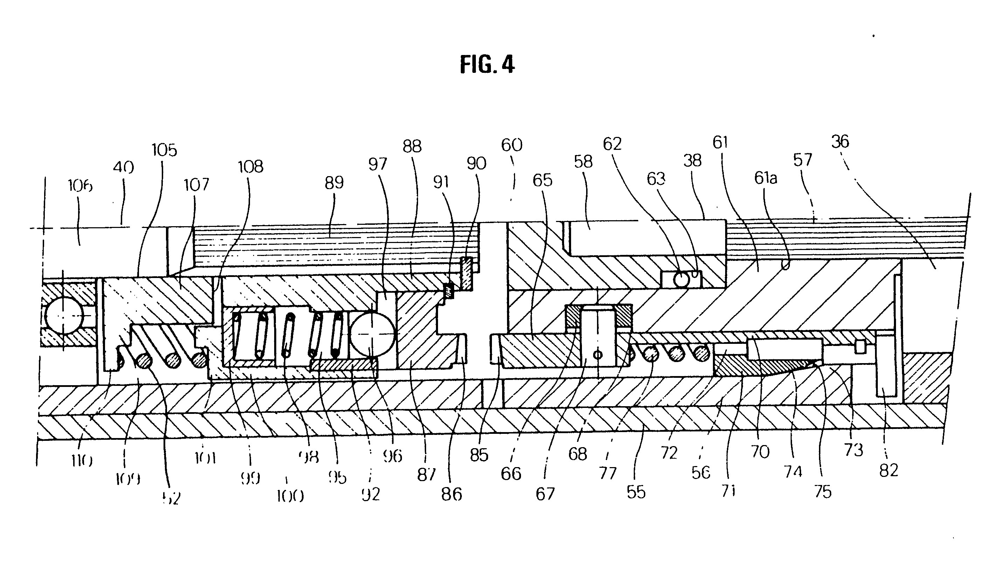

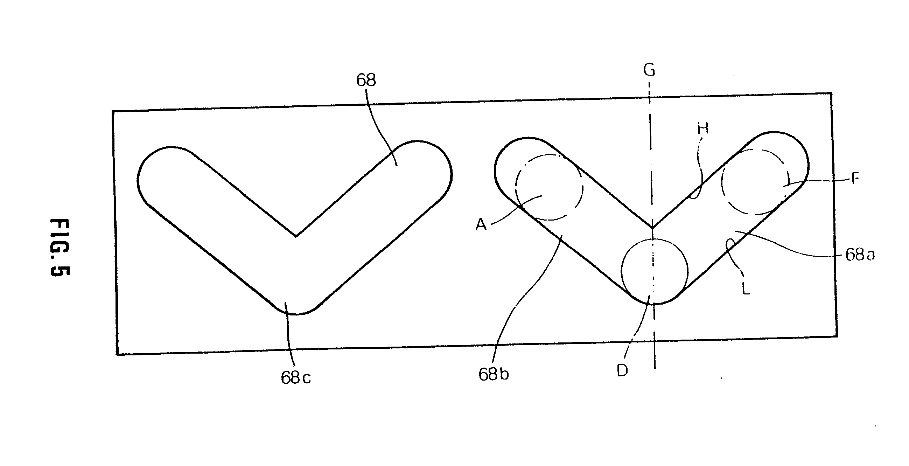

Ces éléments vont être décrits en détail ci-après en référence aux figures 4 et 5.

On retrouve sur la figure 4 le réducteur 36 et son arbre de sortie 38, d'un côté, et l'extrémité de la vis à billes 40, du côté opposé. On a représenté la gaine extérieure 55 faisant partie du corps de la sonde et une enveloppe tubulaire 56 fixée à la gaine 55.

L'arbre 38 comporte une portion cannelée 57 et une portion d'extrémité 58 de plus petit diamètre qui est filetée.

Sur l'extrémité de l'arbre 38 est vissée une bague 60. Une douille 61 entourant avec du jeu la bague 60 comporte des cannelures 61a engagées sur les cannelures de la portion d'arbre 57, la douille 61 étant en butée sur le boîtier du réducteur 36. La bague 60 et la douille 61 sont ainsi solidaires en rotation de l'arbre 38. Une goupille 62 traverse la douille 61 et passe dans une gorge 63 formée sur la périphérie de la bague 60. Cette goupille permet d'extraire la douille 61 lorsqu'on dévisse la bague 60.

Autour de la douille 61 est placé un manchon d'embrayage 65. Le manchon 65 est lié à la douille 61 par l'engagement de deux galets diamétralement opposés 66, montés sur des tétons respectifs 67 fixés au manchon 65, dans des rainures de came hélicoïdales respectives 68 formées dans la périphérie extérieure de la douille 61. La figure 5 montre en vue développée la forme des rainures 68. Chaque rainure de came 68 comprend deux tronçons 68a, 68b symétriques par rapport à une génératrice G de la douille. Les tronçons 68a, 68b se rejoignent du côté de l'arbre d'entraînement en une portion centrale 68c. La valeur préférée pour l'angle entre les tronçons de rainure 68a et 68b est d'environ 90°, ainsi que le montre la figure 5.

Des moyens sont prévus pour immobiliser en rotation le manchon 65 lorsque la position axiale de celui-ci se trouve dans une plage déterminée, afin que la rotation de l'arbre 38 et donc de la douille 61 provoque une translation du manchon 65. A cet effet, le manchon 65 comporte du côté entraînement une partie 70 de diamètre extérieur plus petit que la partie qui porte les tétons 67. Dans l'espace annulaire ainsi ménagé entre le manchon et l'enveloppe fixe 56 est logée une bague de frottement 71 liée en rotation au manchon 65 mais mobile axialement par rapport à celui-ci. La bague 71 comporte intérieurement une rainure axiale 72 dans laquelle est engagée une clavette 73 fixée sur le manchon 65. La bague de frottement 71 présente une surface extérieure 74 de forme sphérique, et la surface intérieure de l'enveloppe 56 en regard de la bague 71 comporte une partie tronconique 75. Un ressort hélicoïdal 77 est monté entre l'épaulement terminant la partie de faible diamètre 70 et la bague de frottement 71. Lorsque les surfaces 74, 75 sont en contact, comme représenté sur la figure 3, le frottement dû à la force exercée par le ressort 77 est tel que le manchon 65 est empêché de tourner avec la douille 61. Une rotation de la douille 61 aura alors pour effet un déplacement en translation du manchon 65.

En outre, un circlip 80 est monté dans une gorge au voisinage de l'extrémité côté réducteur du manchon 65. Ce circlip sert à pousser la bague de frottement 71 contre l'action du ressort 77 après un certain déplacement axial du manchon, réalisant ainsi une liaison avec course morte entre la bague 77 et le manchon 65. Le déplacement de la bague 71 qui en résulte fait disparaître le frottement entre les surfaces 74, 75 et permet au manchon 65 d'être entraîné en rotation par l'arbre.

De plus, un contact électrique 82 lié à l'enveloppe tubulaire 56 est placé au voisinage du réducteur 36. Ce contact est actionné par le manchon 65, lorsque celui-ci vient occuper sa position extrême proche du réducteur. L'impulsion produite par ce contact sert à couper l'alimentation du moteur 35.

Le manchon 65 comporte à son extrémité opposée au réducteur un plateau denté 85 susceptible d'engrener avec un plateau denté 86 formé sur une contre-bague 87. Les plateaux dentés 85 et 86 sont constitués de dentures radiales de section triangulaire.

La contre-bague 87 est montée rotative autour d'une douille cannelée 88 liée en rotation à la vis 40, dont l'extrémité 89 comporte des cannelures correspondantes. Des circlips d'arrêt 90 et 91 sont montés respectivement sur la vis 40 et sur la douille 88 pour servir de butée axiale respectivement à la douille 88 et à la contre-bague 87.

Du côté opposé, la surface radiale de la contre-bague 87 est séparée par un faible jeu d'une collerette 92 prolongeant radialement la douille 88. La collerette 92 comporte une pluralité de trous 95 dirigés axialement dont chacun reçoit une bille 96, et la contre-bague 87 comporte de même une pluralité de rainures radiales 97 dans lesquelles pénètrent respectivement les billes 96. Chacune des billes 96 est repoussée élastiquement contre le fond de la rainure 97 correspondante par un ressort hélicoïdal 98 prenant appui sur un anneau 99 à section en U, lequel anneau est immobilisé en rotation par rapport à la douille 88. L'anneau 99 est positionné axialement par une bague de réglage 100 vissée sur la surface extérieure filetée de la collerette 92 et comprenant une portion radiale 101 en contact avec l'anneau 99.

L'ensemble formé par la douille 88, les billes 96 et les éléments 98—100 constitue le limiteur de couple sus-mentioné. En effet, les billes 96 maintenues contre le fond des rainures 97 par l'action des ressorts 98 transmettent normalement le couple de la contre-bague 87 à la douille 88. Mais au-delà d'une certaine valeur, les billes s'écartent du fond des rainures en comprimant les ressorts 98 et le couple n'est plus transmis.

Une bague 105 est vissée sur une partie filetée 106 de la vis 40, qui fait suite à l'extrémité 89. La bague 105 comporte successivement, en s'éloignant de l'extrémité de la vis, une portion de petit diamètre 107 qui forme butée par sa face d'extrémité radiale pour la douille 88 et constitue la butée 53 mentionnée ci-dessus en référence à la figure 3, une portion 109 de diamètre intermédiaire et une partie 110 de plus grand diamètre qui sert d'appui au ressort hélicoïdal 52 également mentionné ci-dessus, lequel ressort agit sur la portion radiale 101 de la bague de réglage 100, et donc indirectement sur la contre-bague 87 portant le plateau denté 86.

Le système vis-écrou 40, 41 ne présente pas de particularité exigeant une description détaillée. L'écrou 41 est, de façon classique, assujetti à se déplacer uniquement en translation, de sorte qu'une rotation de la vis à billes 40 dans un sens provoque une translation de l'écrou 41 dans la direction correspondante.

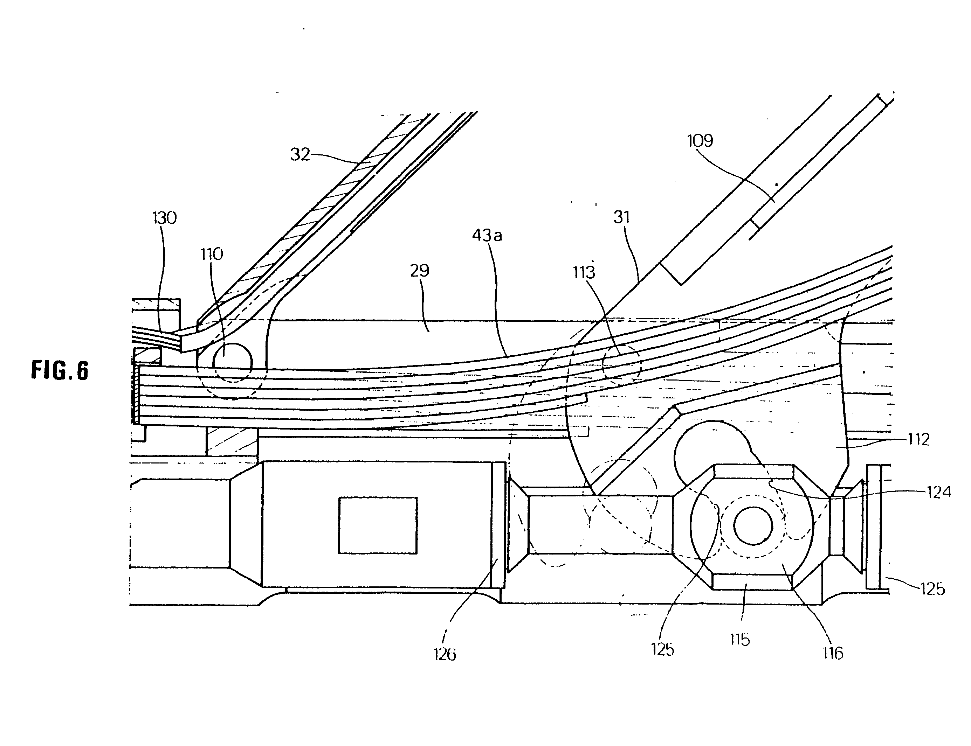

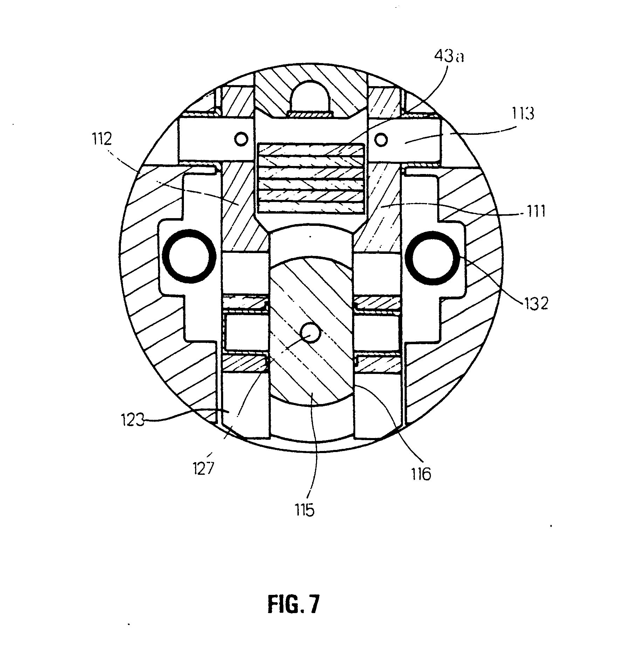

Les figures 6 et 7 montrent plus en détail l'articulation des bras 31 et 32 sur la sonde. Le bras supérieur 32 est reliée au corps de sonde 29 par un pivot 110. Le bras inférieur 31 qui transmet les efforts au patin 30, est formé de deux flasques parallèles identiques réunis par des entretoises telles que 109, qui se prolongent par des crosses identiques 111, 112 écartées l'une de l'autre. Les crosses 111, 112 sont traversées par un pivot 113 lié au corps de sonde, les axes des pivots 110 et 113 étant perpendiculaires à l'axe de la sonde et équidistants de cet axe.

Les crosses 111, 112 entourent à leur extrémité une partie 115 de la tige d'actionnement 34, laquelle partie comporte des méplats 116 parallèles au plan de pivotement du bras 31. Sur cette partie 115 sont fixés de part et d'autre des galets 121. Les crosses 111, 112 comportent chacune une fente allongée 123 engagée autour d'un galet 121 de sorte qu'un déplacement de la tige 34 provoque un pivotement du bras 31 autour de l'axe 113. La figure 6 montre en trait plein la position d'ouverture maximale du bras 31 et en trait mixte la position de fermeture.

Les parois 124, 125 des fentes 123 en contact avec les galets 121 ont sensiblement la forme de développantes de cercle. Une développante de cercle est le lieu géométrique d'un point d'une droite D qui roule sans glisser sur un cercle C. Dans le cas présent, la droite D est l'axe de la tige 34 et le cercle C est centré sur le centre de rotation du bras 31, c'est-à-dire l'axe du pivot 113, et tangent à l'axe de la tige 34. Au cours de la rotation du bras 31, un point lié à la tige 34 et en contact avec un flasque du bras 31 décrira donc une développante de cercle. Ces courbes ont pour propriété d'avoir une tangente qui est constamment perpendiculaire à la droite D, c'est-à-dire en l'occurrence à la tige 34. L'avantage est qu'un effort peut être transmis au bras sans introduire de composante radiale sur la tige d'actionnement 34.

On notera également, en référence aux figures 6 et 7, qu'un ressort à lames 43a faisant partie du dispositif de rappel 43 sus-mentionné est fixé au corps de sonde 29 au voisinage du pivot 110 du bras supérieur 32 et qu'il passe entre les crosses 111, 112 du bras 31. D'autre part, la tige 34 traverse, de part et d'autre de la zone d'engagement avec le bras 31, des boîtiers 125, 126 à l'intérieur desquels sont montés les joints 45 susmentionnés. L'huile mise à la pression de la boue du forage par le dispositif de compensation 47 peut circuler jusqu'à l'extrémité de la tige 34 par un passage central 127.

On a aussi représenté à la figure 6 des conducteurs 130 portés par le bras 32, qui relient le patin 30 à la cartouche 22, et à la figure 7 des gaines 131 recevant les conducteurs électriques qui relient la cartouche 22 à la section de détection et à la section d'ancrage, notamment pour la commande du moteur 35.

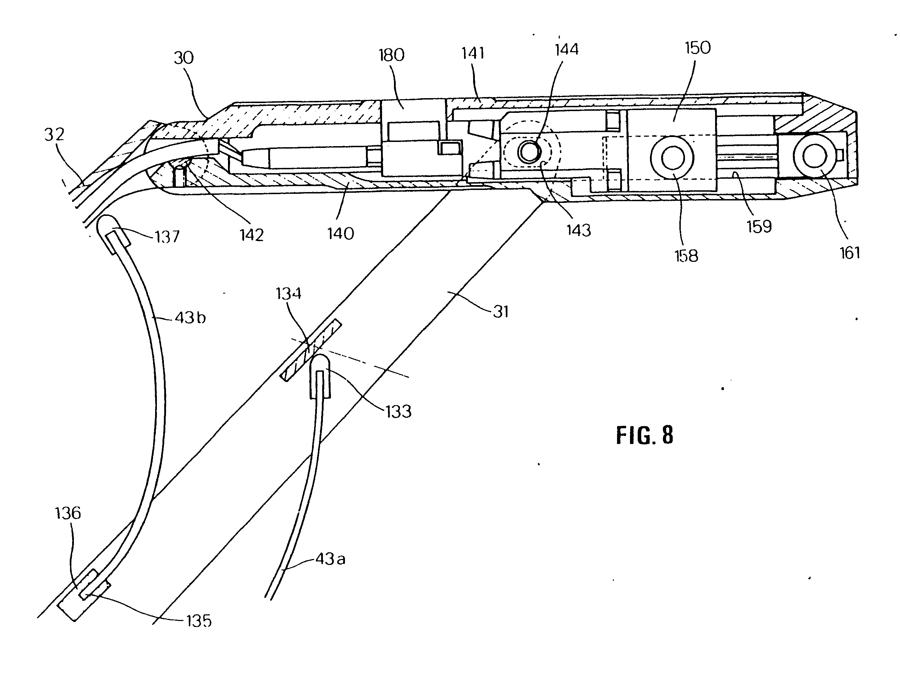

La figure 8 précise l'agencement du dispositif de rappel 43. Le ressort à lames 43a mentionné ci-dessus en référence à la figure 6, qui est fixé à une extrémité au corps de sonde, agit par son extrémité opposée 133 sur une pièce d'âme 134 du bras 31 placée entre les flasques, un glissement relatif entre l'extrémité 133 et la pièce 134 se produisant au cours du pivotement du bras 31. Un second ressort 43b, formé d'une lame unique et donc plus léger que le ressort 43a, est fixé par une extrémité 135 à une autre pièce d'âme 136 du bras 31, placée plus près du pivot 113 que la pièce 134. L'autre extrémité 137 du ressort 43b agit sur le bras supérieur 32 au voisinage de son extrémité, avec là aussi un glissement lorsque les bras pivotent.

La figure 8 montre plus en détail le patin d'ancrage 30. Le patin 30, comme on l'a vu, est monté à l'extrémité du bras supérieur 32 et du bras inférieur 31, dont un seul des flasques est représenté sur la vue en coupe de la figure 8, lesquels flasques entourent le patin.

Le patin 30 comprend un corps évidé 140 du côté intérieur et une plaque d'usure 141 destinée au contact avec la paroi, fixée sur le corps de patin 140. La plaque d'usure 141 est munie sur sa surface de stries en vue d'optimiser l'ancrage dans la paroi.

Le corps de patin 140 est relié à l'extrémité du bras supérieur 32 par un pivot 142. Il comporte d'autre part, sensiblement en son milieu, des ouvertures 143 pratiquées dans ses parois latérales. Les ouvertures 143 ont la forme de rectangles arrondis aux sommets, et reçoivent un pivot 144 lié aux flasques du bras inférieur 31.

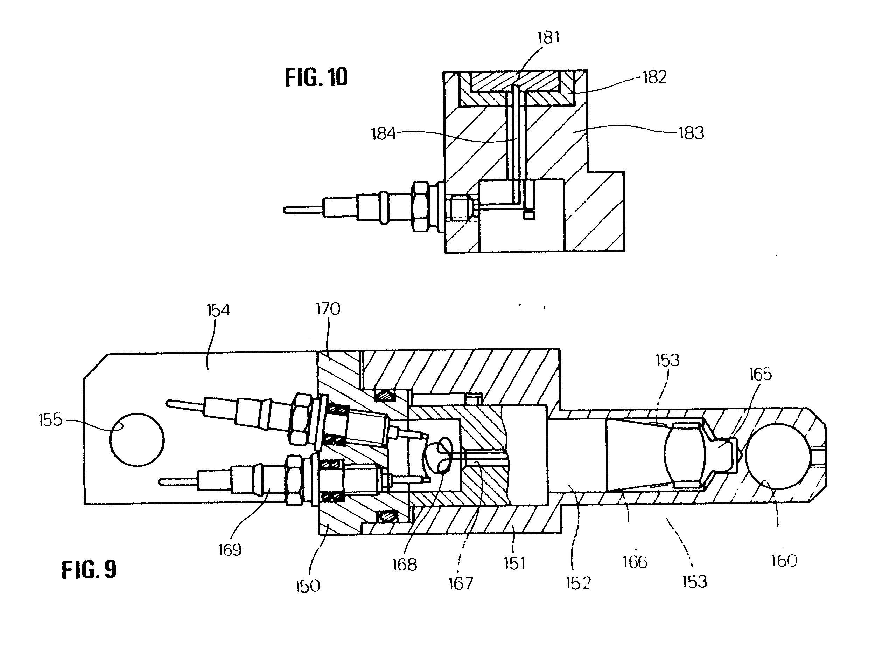

Un capteur de force, désigné dans son ensemble par la repère 150, est logé dans le corps de patin 140. Ce capteur, représenté plus en détail sur la figure 9, comprend en tant qu'éléments sensibles des jauges de contrainte. Il comporte une gaine 151 résistant à la pression, de section rectangulaire, à l'intérieur de laquelle est placé un élément de flexion 152 portant les jauges de contrainte 153.

La gaine 151 se prolonge du côté supérieur par deux flasques 154 munis de trous 155 recevant sans jeu le pivot 144 lié au bras 31. La gaine 151 porte en outre, à peu près en son milieu, deux galets 158 engagés dans des fentes allongées 159 formées dans les parois latérales du corps de patin. Au voisinage de son extrémité inférieure, la gaine 151 présente un trou 160 dans lequel est engagée une tige 161 dont les extrémités pénètrent respectivement dans les fentes 159.

En résumé, le corps de patin 140 est monté pivotant par rapport au bras supérieur 32 et il est relié au bras inférieur 31 par l'intermédiaire du capteur de force 150 qui, d'une part, est mobile en translation par rapport au corps de patin, et d'autre part, est lié au bras 31 par le pivot 144, le débattement entre le pivot 144 et le corps de patin étant limité par les bords des ouvertures 143 formées dans le corps de patin. Il en résulte que le patin a la possibilité de basculer légèrement, dans un sens ou dans l'autre, par rapport à la position médiane, parallèle à l'axe de la sonde, qui est celle représentée sur la figure 8. Lorsque le patin s'écarte ainsi de sa position médiane, le bras supérieur 32 pivote légèrement par rapport à la sonde en s'écartant de sa position parallèle au bras inférieur 31.

Cette possibilité de basculement du patin 30 lui permet d'épouser étroitement la paroi du forage même si celle-ci présente une irrégularité à l'endroit du contact avec le patin. Ceci est avantageux pour l'obtention d'un bon ancrage. En outre, les efforts sur le patin seront répartis régulièrement sur toute sa surface, de sorte que la mesure effectuée au moyen du capteur de force, qui porte sur l'effort au niveau du pivot 144, sera bien représentative de l'effort sur l'ensemble du patin.

On notera que l'agencement du dispositif de rappel, avec les deux ressorts 43a et 43b, élimine les risques de coincement de l'ensemble bras-patin dans la position de fermeture qui auraient pu résulter du basculement du patin.

En ce qui concerne le capteur de force, il faut indiquer que l'élément de flexion comporte une extrémité inférieure 165 analogue à une rotule engagée dans le fond du logement formé à l'intérieur de la gaine 151. Les jauges de contrainte 153 sont placées sur des méplats inclinés 166 formés sur des côtés opposés de l'élément de flexion. Sur chaque méplat sont disposées deux jauges, et les quatre jauges sont connectées selon un montage en "pont complet", de manière classique dans la technique des mesures par jauges de contrainte. L'élément de flexion comporte des conduits tels que 167 pour le passage des conducteurs électriques 168 reliant le circuit des jauges à quatre connecteurs 169 (deux pour l'alimentation et deux pour transmettre le signal de détection) qui traversent un bloc d'étanchéité 170 fixé à la gaine 151. Des conducteurs, non représentés sur la figure 8, et portés par le bras 32, relient ces connecteurs à la cartouche électronique 22.

Le capteur de force ainsi inséré dans le patin fournit une indication de l'effort effectif sur le patin. La mesure de l'effort d'ancrage fournie par le capteur présente une excellente reproductibilité, car comme il s'agit d'une mesure faite directement au niveau du patin, les facteurs d'erreur sont minimisés. Cette mesure est utilisée pour arrêter le fonctionnement du moteur 35 lorsque l'effort d'ancrage a atteint une valeur déterminée considérée comme satisfaisante. Cette valeur est choisie de façon appropriée égale à environ deux fois le poids de la sonde dans l'air.

En outre, la valeur de mesure fournie par le capteur est transmise via la cartouche 24 à l'équipement de surface, ce qui permet de surveiller la qualité de l'ancrage au cours de la série de tirs effectuée au même niveau. Il peut arriver, en particulier dans les formations molles, que la force d'ancrage diminue après quelques tirs. Grâce au capteur monté sur le patin, cette diminution sera détectée et il sera possible d'y remédier en remettant en marche le moteur, qui s'arrêtera automatiquement une fois la force d'ancrage revenue à la valeur désirée. Une telle possibilité est d'un grand intérêt étant donné que, comme on l'a vu, la force d'ancrage est un paramètre essentiel pour la qualité des signaux de détection sismiques.

Le patin porte en outre un dispositif 180 destiné à émettre un courant électrique pour évaluer la résistivité de la zone superficielle de la formation traversée par le forage. Ce dispositif, représenté plus en détail à la figure 10, comprend une électrode 181 en matière conductrice placée sur un isolant 182 logé lui-même dans un évidement d'un support 183 en matière conductrice faisant office de masse. Ce support comporte un conduit pour le passage d'un conducteur électrique 184 relié à l'électrode 181. La réception du courant électrique ainsi émis peut être assurée par la tête de connection 23 reliant la cartouche 22 au câble 13. On peut ainsi réaliser une diagraphie de microrésistivité qu'on pourra corréler avec d'autres diagraphies effectuées dans le même forage pour déterminer avec précision la profondeur des niveaux d'ancrage.

On va maintenant décrire le fonctionnement de la sonde décrite ci-dessus, au cours d'un cycle complet de mesures.

On descend la sonde dans le forage avec les bras 31, 32 en position repliée. Dans cette position, le moteur 35 n'est pas alimenté et est bloqué par son frein 37. Le dispositif d'accouplement est embrayé, c'est-à-dire que les plateaux dentés 85, 86 sont en prise et la douille 88 est en butée contre la pièce 107. Le couple résistant fourni par le moteur s'oppose à l'ouverture des bras sous l'action du ressort à lames 43. Chacun des galets 66 occupe une position avancée F dans le tronçon 68a de sa rainure de came, en contact avec la paroi inférieure L du dit tronçon.

Lorsque la sonde atteint le niveau $H_1$ correspondant à la première mesure prévue, on met en marche le moteur 35 dans le sens inverse des aiguilles d'une montre. Les bras 31, 32 peuvent alors s'écarter sous l'action des ressorts à lames 43. Dans cette phase d'ouverture, le moteur 35 agit seulement pour limiter la vitesse d'ouverture des bras. Les galets 66 sont maintenus en contact avec les parois inférieures L par l'action des ressorts 43, de sorte que le ressort 52 ne peut pas agir pour écarter la douille 88 de la butée 107.

Lorsque le patin 30 arrive au contact de la paroi du forage, l'action des ressorts 43 cesse. Le moteur 35 continuant à tourner dans le même sens, les galets 66 viennent en contact avec les parois supérieures H des tronçons de rainure 68a. Le ressort 52 repousse alors la douille 88 hors de contact de la butée 107 et aussi le manchon 65. La bague de frottement 71 déplacée avec le manchon vient frotter sur la portée conique 75.

Lorsque la douille 88 arrive en butée sur le circlip 90, l'action du ressort 52 cesse. La poursuite de la rotation du moteur 35, étant donné que le manchon 65 est bloqué en rotation par le frottement de la bague 71, provoque un déplacement des galets 66 dans les rainures de came vers la portion centrale 68c (position D des galets). Le manchon 65 se déplace ainsi en direction du réducteur, ce déplacement amenant un découplement complet des plateaux dentés 85, 86. Le dispositif est donc placé en position débrayée. Lorsque le manchon 65 atteint la position extrême représentée à la figure 4, le micro-contract 82 est excité et l'impulsion produite commande l'arrêt du moteur 35.

Pour effectuer l'ancrage du patin dans la paroi, on remet en marche le moteur 35, toujours dans le sens inverse. Les galets 66 avancent alors dans les tronçons 68b des rainures de came. Le plateau denté 85 entre en contact avec le plateau 86. Au cours de ce premier déplacement du manchon, la bague de frottement 71 n'est pas déplacée.

La rotation du moteur se poursuivant, les galets 66 continuent d'avancer et le manchon 65 pousse la douille 88 contre l'action du ressort 52. Ce faisant, le circlip 80 repousse la bague de frottement 71, de sorte que le frottement qui empêchait le manchon 65 de tourner disparaît progressivement. Mais le couple moteur n'est réellement transmis à la douille 88 qu'à partir du contact de celle-ci avec la butée 107. Jusque là, le couple moteur n'a servi qu'à vaincre l'action du ressort 52. Lorsque ce contact se réalise, les galets 66 ont atteint leur position extrême A dans les tronçons 68b.

A partir du dit contact, le dispositif d'accouplement étant en position embrayée, le couple moteur est transmis à la vis 40. La tige 34 liée à l'écrou 41 se déplace en direction du réducteur pour ancrer le patin dans la paroi. Ce déplacement de la tige est très limité, de l'ordre de quelques millimètres.

Le capteur 150 adresse à la cartouche 22 un signal représentatif de l'effort d'ancrage sur le patin. Lorsque l'effort atteint la valeur déterminée sus-mentionnée, correspondant à un ancrage satisfaisant, la cartouche 22 commande l'arrêt du moteur 35.

La phase qui suit est la phase d'acquistion sismique proprement dite au niveau considéré. On effectue plusieurs tirs successifs au moyen de la source 11, et les ondes sismiques qui se sont propagées dans les formations sont détectées par la section de détection. Les signaux de détection produits à la suite des tirs respectifs sont transmis par la cartouche 24 et le câble 13 à l'équipement de surface 16, où ils sont enregistrés sur un support graphique et sur une bande magnétique.

Pendant toute cette phase, la position des éléments de la section d'ancrage ne varie, pas: moteur bloqué par son frein, dispositif d'accouplement embrayé. La seule différence avec la position de fermeture est que les galets 66 sont dans les tronçons de rainure 68b au lieu d'être dans les tronçons de rainure 68a.

Comme on l'a indiqué plus haut, la surveillance de la force d'ancrage permet de remédier à une éventuelle diminution de cette force au cours de la phase d'acquisition sismique. Il suffit pour cela de remettre en marche le moteur 35, toujours dans le sens inverse. Le moteur sera arrêté dès que la force d'ancrage atteindra la valeur souhaitée.

Après cette phase de mesure, il s'agit de désancrer le patin 30. On met en marche le moteur 35 dans le sens des aiguilles d'une montre (sens direct), ce qui met fin à l'action du frein 37. Aussi longtemps qu'un effort sur le patin dû à l'élasticité de la formation s'exerce dans le sens du désancrage sur la vis 40, les galets 66 restent dans la position A. Lorsque cet effort s'annule, le ressort 52 repousse la douille 88 hors de contact avec la butée 107. Le déplacement correspondant du manchon 65 permet à la bague de frottement 71 de revenir en contact avec la portée conique 75. L'action du ressort 52 cesse lorsque la douille 88 vient buter sur le circlip 90. Le manchon 65 se trouve alors immobilisé en rotation et subit par suite de la rotation du moteur une translation en direction du réducteur, au début de laquelle le plateau denté 85 cesse d'être en prise avec le plateau denté 86.

A la fin de ce déplacement, les galets 66 ont atteint la position D dans la portion centrale des rainures de came, et la manchon 65 actionne le contact 82, de sorte que le moteur 35 s'arrête. Le patin 30 est maintenu en contact avec la paroi du forage par les ressorts 43.

La phase suivante est le déplacement de la sonde du niveau $H_1$ à un second niveau de mesure $H_2$., par enroulement du câble 13 sur son treuil. Au cours de ce déplacement, le moteur 35 reste à l'arrêt, le dispositif d'accouplement conserve la position débrayée, les galets 66 restant en position D, et le patin glisse sur la paroi du forage, le contact étant maintenu en contact avec la paroi par les ressorts 43.

Pendant ce déplacement, l'électrode 181 reste donc en contact avec la paroi. Elle est alimentée en courant tout au long du déplacement. Le courant recueilli après passage dans la formation est, comme on l'a vu, indicatif de la résistivité d'une zone de faible épaisseur entourant le forage.

Lorsque la sonde a atteint le deuxième niveau de mesure $H_2$, on répète les opérations d'ancrage, d'acquisition sismique, et de désancrage, puis on remonte la sonde jusqu'à un troisième niveau de mesure $H_3$, etc.

On observera que comme le patin reste constamment en contact avec la paroi, les seules opérations mécaniques à exécuter à chaque niveau sont l'ancrage et le désancrage du patin, et qu'on n'a pas à ouvrir et à fermer les bras portant le patin à chaque niveau. Ceci représente un gain de temps d'autant plus substantiel que le nombre total die niveaux de mesure pour un cycle complet peut dépasser la centaine.

Une fois terminé le désancrage du patin au dernier niveau de mesure, il faut refermer les bras 31, 32 en vue de la remontée de la sonde en surface. A cet effet, on met en marche le moteur 35 dans le sens direct. Le manchon 65 est au départ bloqué en rotation par la bague de frottement 71, et les galets 66 dans la position D correspondant au débrayage.

Du fait de la rotation du moteur, les galets avancent dans le tronçon de rainure 68a.

Le manchon 65 se déplace jusqu'au contact entre les plateaux dentés 85, 86, puis les ressorts 43 exerçant un couple résistant sur la douille 88, le manchon 65 continue son déplacement en translation en repoussant la douille 88 contre l'action du ressort 52. Lorsque la douille 88 arrive au contact de la butée 107, le couple moteur est transmis à la douille 88 et surmonte le couple résistant offert par les ressorts 43 pour faire pivoter les bras 31, 32 jusqu'à leur position de fermeture le long du corps de sonde.

**Revendications**

1. Procédé d'acquisition de signaux sismiques à des niveaux successifs dans un forage, en réponse à des ébranlements produits par une source sismique, au moyen d'onde sonde (12) comprenant un corps (29) allongé, des moyens (20) de détection d'ondes sismiques, un organe d'ancrage (30, 31, 32) articulé sur le corps, un dispositif élastique (43) agissant pour écarter l'organe d'ancrage du corps de sonde de façon à la placer en contact avec la paroi du forage et un dispositif moteur (35, 36) capable de placer l'organe d'ancrage en position repliée contre l'action du dispositif élastique, caractérisé par le fait que, à chacun desdits niveaux, on applique à l'organe d'ancrage, en position écartée, au moyen du dispositif moteur, une force propre à le rendre solidaire de la paroi du forage, puis, une fois obtenu au moins un signal de détection, une force propre à désolidariser l'organe d'ancrage de la paroi, et on déplace la sonde d'un niveau à l'autre en laissant l'organe d'ancrage en position écartée sous l'action du dispositif élastique.

2. Procédé selon la revendication 1, caractérisé par le fait que la force appliquée à l'organe d'ancrage pour la solidariser avec la paroi est égale à environ deux fois le poids de la sonde.

3. Procédé selon l'une des revendications 1 et 2, caractérisé par le fait que, au cours des déplacements entre niveaux, on effectue une diagraphie d'une caractéristique des formations traversées par le forage à l'aide de moyens de mesure (180, 23) portés au moins en partie par l'organe d'ancrage.

4. Procédé selon la revendication 3, caractérisé par le fait que l'on effectue une diagraphie de microrésistivité.

5. Sonde pour l'acquisition de signaux sismiques à différents niveaux dans un forage, du type comprenant:
— un corps allongé (29);
— des moyens de détection d'ondes sismiques (20) dans le corps;
— un organe d'ancrage (30, 31, 32) articulé sur le corps, et pouvant occuper une position repliée sensiblement dans la direction du corps;
— un dispositif élastique (43) agissant pour écarter l'organe d'ancrage du corps;
— un dispositif moteur (35, 36) capable de placer l'organe d'ancrage en position repliée contre l'action du dispositif élastique, par l'intermédiaire d'un ensemble de transmission (40, 41, 34), caractérisée par le fait que le dispositif moteur est capable de fournir un couple dans les deux sens de rotation, et l'ensemble de transmission comprend un dispositif d'embrayage (39).

6. Sonde selon la revendication 5, caractérisée par le fait que le dispositif d'embrayage comprend
— un élément d'entrée (61) lié à l'arbre de sortie (38) du dispositif moteur;
— un élément intermédiaire (65) lié à l'élément d'entrée par l'engagement d'au moins une saillie (66) dans une rainure formée de deux tronçons hélicoïdaux (68a, 68b), symétriques par rapport à un plan passant par l'axe de rotation de l'élément d'entrée, et raccordés par une portion centrale (68c);
— des moyens (71, 75) pour bloquer en rotation l'élément intermédiaire lorsque la dite saillie se trouve dans une plage de position déterminée, centrée sur la dite portion centrale;
— un élément de sortie (88) mobile axialement entre une première et une seconde position de butée et rappelé élastiquement vers cette seconde position;
— et des moyens d'accouplement (85, 86) liés respectivement à l'élément intermédiaire et l'élément de sortie, l'engagement entre ces moyens se produisant à partir d'un éloignement déterminé de la dite saillie vis-à-vis de la portion centrale.

7. Sonde selon la revendication 6, caractérisée par le fait qu'elle comprend un détecteur de position (82) agencé pour émettre une impulsion électrique lorsque la dite saillie (66) vient occuper la portion de rainure centrale (68c), la dite impulsion commandant l'arrêt du dispositif moteur (35, 36).

8. Sonde selon l'une des revendications 6 et 7, caractérisée par le fait que les moyens de blocage comprennent une surface sensiblement tronconique (75) formée à l'intérieur du corps et une bague de frottement (71) logée entre l'élément intermédiaire (65) et le corps et pourvue d'une surface (74) sensiblement sphérique, la dite bague étant solidiare en rotation de l'élément intermédiaire et lié en translation à cet élément avec une course morte, la bague étant rappelée élastiquement dans le sens du contact entre les dites surfaces, un tel contact ayant pour effet d'immobiliser en rotation la bague (71) et donc l'élément intermédiaire (65).

9. Sonde selon l'une des revendications 6 à 8, caractérisée par le fait que l'élément de sortie comporte un limiteur de couple à billes (96, 98, 99, 100).

10. Sonde selon l'une des revendications 5 à 9, caractérisée par le fait que l'organe d'ancrage comprend un patin (30) supporté par deux bras articulés sur le corps selon une configuration sensiblement en parallélogramme, à savoir un bras supérieur (32) et un bras inférieur (31), et le bras inférieur est relié à une tige d'actionnement (34) à déplacement axial, constituant la sortie de l'ensemble de transmission, de manière à pivoter lorsque la tige exécute une translation.

11. Sonde selon la revendication 10, caractérisée par le fait que la liaison entre le bras inférieur (31) et la tige d'actionnement (34) est réalisée par l'engagement d'au moins un galet (121) lié à la tige (34) dans une fente allongée (123) formée dans un prolongement (111, 112) du bras, les parois (124, 125) de la dite fente ayant sensiblement la forme de développantes de cercle.

12. Sonde selon l'une des revendications 10 et 11, caractérisée par le fait que le patin (30) est, au voisinage de son extrémité supérieure, relié en pivotement au bras supérieur (32) et est relié sensiblement en son milieu au bras inférieur (31) de manière à pouvoir s'écarter d'un côté ou de l'autre d'une position médiane parallèle à l'axe du corps de sonde (29).

13. Sonde selon la revendication 12, caractérisée par le fait que le dispositif élastique comprend un premier ressort à lame (43a) fixé au corps par une extrémité et agissant par son autre extrémité sur le bras inférieur (31), et un second ressort à lame (43b) fixé au bras inférieur (31) et agissant sur le bras supérieur (32) au voisinage de son articulation avec le patin.

14. Sonde selon l'une des revendications 10 à 13, caractérisé par le fait que le patin porte un dispositif à électrode (180) agencé pour émettre un courant dans la formation entourant le forage.

**Patentansprüche**

1. Verfahren zum Gewinnen seismischer Signale auf aufeinanderfolgenden Niveaus in einem Bohrloch in Abhängigkeit von Erschütterungen, die durch eine seismische Quelle hervorgerufen werden, mittels einer Sonde (12), die einen langgestreckten Sondenkörper (29), Mittel (20) zum Erfassen seismischer Wellen, ein Verankerungsorgan (30, 31, 32), das an den Sondenkörper angelenkt ist, eine elastische Anordnung (43), die für das Entfalten des Verankerungsorgans vom Sondenkörper derart, daß es in Kontakt mit der Bohrlochwandung gelangt, ausgebildet ist, sowie eine Motoranordnung (35, 36) umfasst, die in der Lage ist, das Verankerungsorgan in eine eingefaltete Position gegen die Wirkung der elastischen Anordnung zu plazieren, dadurch gekennzeichnet, daß auf jedem der genannten Niveaus man auf das Verankerungsorgan in entfalteter Position mittels der Motoranordnung eine Kraft zur Einwirkung bringt, die angemessen ist, um es mit der Bohrlochwandung fest zu verbinden, daß man dadurch, wenn einmal ein Erfassungssignal gewonnen worden ist, eine Kraft einwirken läßt, um das Verankerungsorgan von der Wandung zu lösen, und daß man die Sonde von einem Niveau auf ein anderes verlagert, indem man das Verankerungsorgan in entfalteter Position unter der Wirkung der elastischen Anordnung beläßt.

2. Verfahren nach Anspruch 1, dadurch gekennzeichnet, daß die auf das Verankerungsorgan übertragene Kraft, um es mit der Wandung fest zu verbinden, gleich etwa dem zweifachen des Gewichtes der Sonde ist.

3. Verfahren nach einem der Ansprüche 1 und 2, dadurch gekennzeichnet, daß man während der Verlagerung zwischen den Niveaus eine Diagraphie eines Kennwertes der von dem Bohrloch durchteuften Formationen mit Hife von Messmitteln (180, 23) durchführt, die mindestens teilweise von dem Verankerungsorgan getragen werden.

4. Verfahren nach Anspruch 3, dadurch gekennzeichnet, daß man eine Diagraphie der Mikroresistivität durchführt.

5. Sonde für die Gewinnung seismischer Signale auf unterschiedlichen Niveaus in einem Bohrloch des Typs, der umfaßt:
— einen langgestreckten Sondenkörper (29);
— Mittel (20) zum Erfassen seismischer Wellen in dem Körper;
— ein Verankerungsorgan (30, 31, 32) angelenkt an den Körper, das eine im wesentlichen in Richtung des Körpers eingefaltete Position einnehemen kann;
— eine elastische Anordnung (43), die in Richtung Entfaltung auf das Verankerungsorgan des Körpers einwirkt;
— eine Motoranordnung (35, 36), die in der Lage ist, das Verankerungsorgan in eingefaltete Position gegen die Wirkung der elastischen Anordnung über eine Getriebebaugruppe (40, 41, 34) zu plazieren, dadurch gekennzeichnet, daß die Motoranordnung in der Lage ist, ein Drehmoment in beiden Drehrichtungen zu liefern, und daß die Getriebbaugruppe eine Kupplungsanordnung (39) umfaßt.

6. Sonde nach Anspruch 5, dadurch gekennzeichnet, daß die Kupplungsanordnung umfaßt:
— ein Eingangselement (61) verbunden mit der Ausgangswelle (38) der Motoranordnung;
— ein Zwischenelement (65) verbunden mit dem Eingangselement über den Eingriff mindestens eines Vorsprungs (66) in eine Nut, bestehend aus zwei schraubenlinienförmigen Abschnitten (68a, 68b), symmetrisch bezüglich einer Ebene, die sich durch die Drehachse des Eingangselementes erstreckt, und die Verbunden sind durch einen Zentralabschnitt (68c);
— Mittel (71, 75) zum Blockieren der Drehung des Zwischenelementes, sobald der genannte Vorsprung sich in einem Bereich bestimmter Positionen befindet, zentriert bezüglich des genannten Zentralabschnitts;
— ein Ausgangselement (88), das axial beweglich ist zwischen einer ersten und einer zweiten Anschlagposition, und das elastisch in Richtung dieser zweiten Position vorgespannt ist;
— und Kupplungsmittel (85, 86) verbunden mit dem Zwischenelement bzw. dem Ausgangselement, wobei der Eingriff zwischen diesen Mitteln hervorgerufen wird, ausgehend von einer vorbestimmten Entfernung des genannten Vorsprungs bezüglich des Zentralabschnitts.

7. Sonde nach Anspruch 6, dadurch gekennzeichnet, daß sie einen Positionsdetektor (82) umfaßt, ausgebildet zum Aussenden eines elektrischen Impulses, sobald der genannte Vorsprung (66) den zentralen Nutenabschnitt (68c) einnimmt, wobei der genannte Impuls das Stillsetzen der Motoranordnung (35, 36) bewirkt.

8. Sonde nach einem der Ansprüche 6 und 7, dadurch gekennzeichnet, daß die Blockiermittel eine im wesentlichen kegelstumpfförmige Oberfläche (75), ausgebildet im Inneren des Sondenkörpers, und einen Reibungsring (71) umfassen, der zwischen dem Zwischenelement (65) und dem Körper angeordnet und mit einer im wesentlichen sphärischen Oberfläche (74) versehen ist, welcher Ring drehfest mit dem Zwischenelement verbunden ist und translatorisch verbunden ist mit jenem Element während eines Leerlaufweges, wobei der Ring elastisch in Richtung des Kontaktes der genannten Oberflächen vorgespannt ist, wobei ein solcher Kontakt die Wirkung hat, den Ring (71) und damit das Zwischenelement (65) gegen Drehung zu blockieren.

9. Sonde nach einem der Ansprüche 6 bis 8, dadurch gekennzeichnet, daß das Ausgangselement einen mit Kugeln bestückten Drehmomentbegrenzer (96, 98, 99, 100) umfaßt.

10. Sonde nach einem der Ansprüche 5 bis 9, dadurch gekennzeichnet, daß das Verankerungsorgan einen Schuh (30) umfaßt, getragen von zwei an den Sondenkörper gemäß einer im wesentlichen einem Parallelogramm entsprechenden Anordnung angelenkten Armen, nämlich einem oberen Arm (32) und einem unteren Arm (31), und daß der untere Arm mit einer Betätigungsstange (34) verbunden ist, die axial verlagerbar ist und den Ausgang der Getriebebaugruppe bildet, derart, daß eine Verschwenkung bewirkt wird, sobald die Stange eine Translationsbewegung ausführt.

11. Sonde nach Anspruch 10, dadurch gekennzeichnet, daß die Verbindung zwischen dem unteren Arm (31) und der Betätigungsstange (34) durch den Eingriff mindestens eines mit der Stange (34) verbundenen Schubsteines (121) in einen langgestreckten Schlitz (123) bewirkt wird, ausgebildet in einer Verlängerung (111, 112) des Armes, wobei die Wandungen (124, 125) des genannten Schlitzes im wesentlichen die Form einer Kreisbogenabwicklung besitzen.

12. Sonde nach einem der Ansprüche 10 und 11, dadurch gekennzeichnet, daß der Schuh (30) nahe seinem oberen Ende schwenkbeweglich mit dem oberen Arm (32) verbunden ist und im wesentlichen in seiner Mitte mit dem unteren Arm (31) derart verbunden ist, daß er nach beiden Seiten bezüglich einer mittleren Position die parallel zur Achse des Sondenkörpers (29) ist, ausgelenkt werden kann.

13. Sonde nach Anspruch 12, dadurch gekennzeichnet, daß die elastische Anordnung eine erste Blattfeder (43a) umfaßt, mit einem Ende am Sondenkörper befestigt und mit ihrem anderen Ende auf den unteren Arm (31) einwirkt, sowie eine zweite Blattfeder (43b) umfaßt, die an dem unteren Arm (31) befestigt ist und auf den oberen Arm (32) nahe seiner Anlenkung an den Schuh einwirkt.

14. Sonde nach einem der Ansprüche 10 bis 13, dadurch gekennzeichnet, daß der Schuh eine Elektrodenanordnung (180) trägt, ausgebildet zum Aussenden eines Stromes in die das Bohrloch umgebende Formation.

**Claims**

1. Method for acquiring seismic signals at successive levels in a borehole in response to shocks produced by a seismic source, by means of a sonde (12) comprising an elongated body (29), seismic wave detection means (20), an anchoring member (30, 31, 32) articulated on the body member, a resilient device (43) acting to extend the anchoring member away from the body into engagement with the wall of the borehole, and a drive device (35, 36) capable of retracting the anchoring member against the action of the resilient device, characterized by the following steps: at each one of said levels, applying to the anchoring member in extended position, by means of said drive device, a force capable of anchoring it to the wall of the borehole, and then, once at least one detection signal has been obtained, a force capable of releasing the anchoring member from the wall, and displacing the sonde from one level to another with the anchoring member remaining extended under the action of the resilient means.

2. Method according to claim 1, characterized by the fact that the force applied to the anchoring member to anchor it to the wall is equal to about twice the weight of the sonde.

3. Method according to any one of claims 1 or 2, characterized by the fact that, during the displacing step between levels, a log is made of a characteristic of the formations traversed by the borehole by means of measuring means (180, 23) carried at least partly by said anchoring member.

4. Method according to claim 3, characterized by the fact that a microresistivity log is made.

5. Sonde for acquiring seismic signals at successive levels in a borehole, of the type comprising:
— an elongated body (29);
— seismic wave detection means (20) in the body;
— an anchoring member (30, 31, 32) articulated on the body member and capable of occupying a retracted position substantially along the body;
— a resilient device (43) acting to extend the anchoring member away from the body;
— a drive device (35, 36) capable of retracting the anchoring member against the action of the resilient means, by means of a transmission device (40, 41, 34), characterized by the fact that the drive device is capable of providing a torque in both directions of rotation and that the transmission device comprises a clutch device (39).

6. Sonde according to claim 5, characterized by the fact that the clutch device comprises:
— an input element (61) connected to the output shaft (38) of the drive device;
— an intermediate element (65) connected to the input element by the engagement of at least one projection (66) in a slot formed by two helical sections (68a, 68b) symmetrical with respect to plane going through the axis of rotation of the input element, and connected by a middle portion (68c);
— means (71, 75) for blocking the rotation of the intermediate element when said projection is within a given position range centered on said middle portion;
— an output element (88) mobile axially between a first and a second abutting position and loaded elastically towards this second position;
— and coupling means (85, 86) connected respectively to the intermediate element and to the output element, the engagement between these means taking place as of a given distance of said projection from the middle portion.

7. Sonde according to claim 6, characterized by the fact that it comprises a position detector (82) adapted to emit an electric pulse when said projection (66) reaches the middle slot portion (68c), said pulse controlling the stopping of the drive device (35, 36).

8. Sonde according to any one of claims 6 and 7, characterized by the fact that the blocking means comprise a substantially truncated surface (75) formed within the body member and a friction ring (71) lodged between the intermediate element (65) and the body and having a substantially spherical surface (74), said ring being rotatable with the intermediate element and movable with this element with a lost motion, the ring being loaded elastically in the direction of contact between said surfaces, such contact having the effect of securing said ring (71) and hence the intermediate element (65) against rotation.

9. Sonde according to any one of claims 6 to 8, characterized by the fact that the output element includes a ball-type torque limiter (96, 98, 99, 100).

10. Sonde according to any one of claims 5 to 9, characterized by the fact that the anchoring member comprises a pad (30) supported by two arms articulated on the body substantially in a parallelogram configuration, namely an upper arm (32) and a lower arm (31), the lower arm being connected to an axially moving actuating rod (34) constituting the output of the transmission device, so as to pivot when the rod moves axially.

11. Sonde according to claim 10, characterized by the fact that the link between the lower arm (31) and the actuating rod (34) is obtained by the engagement of at least one roller (121) connected to the rod (34) in an elongated slot (123) formed in an extension (111, 112) of the arm, the walls (124, 125) of said slot having substantially the form of involutes of a circle.

12. Sonde according to any one of claims 10 or 11, characterized by the fact that the pad (30) is swivellably connected in the vicinity of its upper end to the upper arm (32) and is connected in its middle to the lower arm (31) to enable it to move away on either side of a middle position parallel to the axis of the sonde body.

13. Sonde according to claim 12, characterized by the fact that the resilient device comprises a first leaf spring (43a) fixed to the body by one end and acting through its other end on the lower arm (31), and a second leaf spring (43b) fixed to the lower arm (31) and acting on the upper arm (32) in the vicinity of its articulation with the pad.

14. Sonde according to any one of claims 10 to 13, characterized by the fact that the pad has an electrode device (180) adapted to emit a current into the formation surrounding the borehole.

FIG.1

FIG. 2

FIG. 3

# FIG. 4

0 100 708

FIG. 5

FIG.6

**FIG. 7**

FIG. 8

0 100 708

FIG.10

FIG.9